# EUROPÄISCHE PATENTANMELDUNG

(11) **EP 2 208 579 A1**
(43) Veröffentlichungstag der Anmeldung: **21.07.2010**
(21) Anmeldenummer: 09178148.4
(22) Anmeldetag: 07.12.2009
(51) Int. Cl.: B25B 23/10

(54) **Haltevorrichtung für Befestigungsmittel**

(30) Priorität: 16.01.2009 DE 102009000264
(71) Anmelder: HILTI Aktiengesellschaft, 9494 Schaan (LI)
(72) Erfinder: Ruhstaller, Michael, 8858 Innerthal (CH); Zurkirchen, Marco, 8608 Bubikon (CH); Kieber, Markus, 9486 Schaanwald (LI)
(74) Vertreter: Söllner, Oliver

(57) **Zusammenfassung**

Die vorliegende Erfindung betrifft eine Haltevorrichtung (10) für Befestigungsmittel (51), die an einem Eintreibgerät (40) festlegbar ist, wobei die Haltevorrichtung (10) mindestens zwei Greifelemente (20a, 20b) mit jeweils einem daran angeordnetem Backenelement (21, 22) aufweist, wobei die Backenelemente (21, 22) in einer Stützstellung (19) an einem Schaft (52) eines Befestigungsmittels (51) anlegbar sind und wobei wenigstens ein erstes Backenelement (21, 22) an seinem dem anderen Backenelement (21, 22) zugewandten freien Ende (27) eine Ausnehmung (23, 24) für das Befestigungsmittel (51) aufweist, die eine Achse (A) definiert. Das erste Backenelement (21) ist dabei über ein Schwenklager (25), dessen Schwenkachse (S) im Wesentlichen parallel zur Achse (A) verläuft, schwenkbar an dem Greifelement (20a) gelagert.

## Beschreibung

Die vorliegende Erfindung betrifft eine an kraftbetriebenen Eintreibgeräten anordnenbare Haltevorrichtung für Befestigungsmittel, der im Oberbegriff von Patentanspruch 1 genannten Art.

Derartige, an kraftbetriebenen Eintreibgeräten (wie z. B. Schraubgeräte) anordnenbare Haltevorrichtungen für Befestigungsmittel (wie z. B. Schrauben) dienen dem Halten eines Befestigungsmittels vor dem Eintreibvorgang und dem Führen des Befestigungsmittels während des Eintreibvorgangs, um eine Beschädigung der Oberfläche des zu penetrierenden Werkstücks durch ein abrutschendes Befestigungsmittel zu verhindern.

Aus der EP 1 452 276 A1 ist eine Haltevorrichtung für Befestigungsmittel bekannt, die an einem Schraubgerät festlegbar ist. In der Haltevorrichtung ist ein Befestigungsmittel abstützbar, das in ein Werkzeugbit einsetzbar ist, wobei die Haltevorrichtung mindestens zwei Greifelemente aufweist, die in einer Stützstellung an einem Schaft des Befestigungsmittels anlegbar sind und die durch eine Kraftbeaufschlagung in eine Freigabestellung verlegbar sind, in der sie vom Schaft beabstandet sind. An jedem der Greifelemente ist jeweils ein Backenelement angeordnet, wobei wenigstens ein erstes Backenelement an seinem dem anderen Backenelement zugewandten freien Ende eine Ausnehmung für das Befestigungsmittel aufweist, die eine Achse definiert. Die Greifelemente weisen ferner mindestens einen Kontaktbereich auf, der zumindest in der Stützstellung den vordersten Anschlag der Haltevorrichtung in Eintreibrichtung des Schraubgerätes bildet.

Die Aufgabe der vorliegenden Erfindung liegt darin, dass bei einer gattungsgemässen Haltevorrichtung für Befestigungsmittel die Zuführung und anschliessende Führung der Befestigungsmittel verbessert ist.

Diese Aufgabe wird erfindungsgemäss durch die in Anspruch 1 genannten Massnahmen erreicht.

Demnach ist das erste Backenelement über ein Schwenklager, dessen Schwenkachse im Wesentlichen parallel zu der durch die Ausnehmung für das Befestigungsmittel definierten Achse verläuft, schwenkbar an dem Greifelement gelagert. Unter im Wesentlichen parallel werden dabei auch noch leicht geneigte Verläufe der Schwenkachse mit einem Winkel von bis zu 15° gegenüber der Achse verstanden. Durch die erfindungsgemässe Massnahme kann das Backenelement durch ein zugeführtes Befestigungsmittel von dem zweiten, gegenüberliegenden Backenelement in Zuführrichtung des Befestigungsmittels weggeschwenkt werden, so dass das Befestigungsmittel leicht in der Ausnehmung im gegenüberliegenden zweiten Backenelement aufgenommen werden kann. Nach der Aufnahme des Befestigungsmittels in der Ausnehmung am zweiten, stationären Backenelement kann das schwenkbare Backenelement wieder in seine Stützstellung zurückschwenken, in der es ebenfalls das Befestigungsmittel hält und führt.

Vorteilhaft ist das schwenkbare erste Backenelement über ein Federelement in Richtung auf die Stützstellung elastisch beaufschlagt, so dass es in jeder Orientierung zur Gravitationskraft wieder selbstständig in seine Stützstellung zurückschwenken kann.

Von Vorteil kann es ferner sein, wenn die Ausnehmung des schwenkbaren ersten Backenelements an einem entgegen der Zuführrichtung der Befestigungsmittel liegenden Seite offen ist, wodurch die Zuführung der Befestigungsmittel erleichtert wird.

Ein leichteres Verschwenken des ersten Backenelements durch ein zugeführtes Befestigungselement kann erreicht werden, wenn das schwenkbare erste Backenelement im Bereich der offenen Seite der Ausnehmung eine Einführschräge für die Befestigungsmittel aufweist.

Günstig ist auch, wenn das zweite Backenelement eine Abstützfläche für das schwenkbare erste Backenelement aufweist, an der sich das schwenkbare erste Backenelement in der Stützstellung mit einem Vorsprung abstützt. Hierdurch wird die Position des schwenkbaren ersten Backenelements in der Stützstellung klar definiert.

In den Zeichnungen ist die Erfindung in einem Ausführungsbeispiel dargestellt.

### Es zeigen:

- Fig. 1: eine an einem Eintreibgerät angeordnete Haltevorrichtung für Befestigungsmittel in Seitenansicht,
- Fig. 2: die Haltevorrichtung in einer teilweisen Schnittansicht gemäss der Linie II - II aus Fig. 1,
- Fig. 3: die Haltevorrichtung in einer teilweisen Schnittansicht entsprechend Fig. 5 vor der Zufuhr eines Befestigungsmittels,
- Fig. 4: die Haltevorrichtung in einer teilweisen Schnittansicht entsprechend Fig. 5 während der Zufuhr eines Befestigungsmittels,
- Fig. 5: die Haltevorrichtung in einer teilweisen Schnittansicht gemäss der Linie V - V aus Fig. 2 mit einem zugeführten Befestigungsmittel,
- Fig. 6: die Haltevorrichtung in einer teilweisen Schnittansicht entsprechend Fig. 2 während eines Eintreibvorgangs.

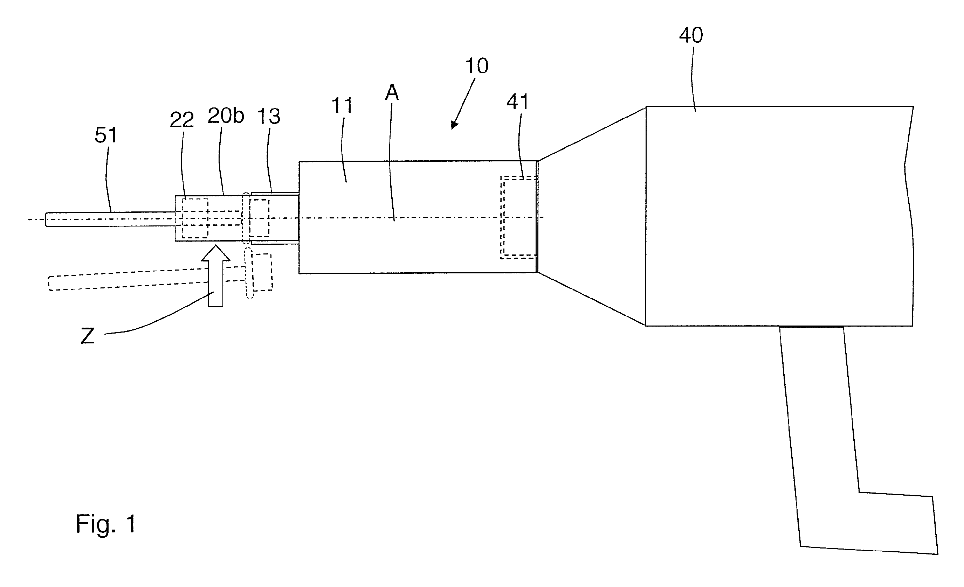

Die Figuren 1 bis 6 zeigen eine insgesamt mit 10 bezeichnete Haltevorrichtung die mit einem Grundkörper 11 an einem Flansch 41 eines nur in Figur 1 angedeuteten, kraftbetriebenen Eintreibgerätes 40 lösbar festgelegt ist. Das hier teilweise wiedergegebene Eintreibgerät ist dabei als elektrisch betriebenes Schraubgerät ausgebildet. Die dargestellte Haltevorrichtung 10 dient dem Halten und Führen einzeln manuell zugeführter Befestigungsmittel 51. Alternativ kann die Haltevorrichtung 10 jedoch auch mit einem Befestigungsmittelmagazin zusammenwirken, über welches der Haltevorrichtung 10 Befestigungsmittel zugeführt werden können.

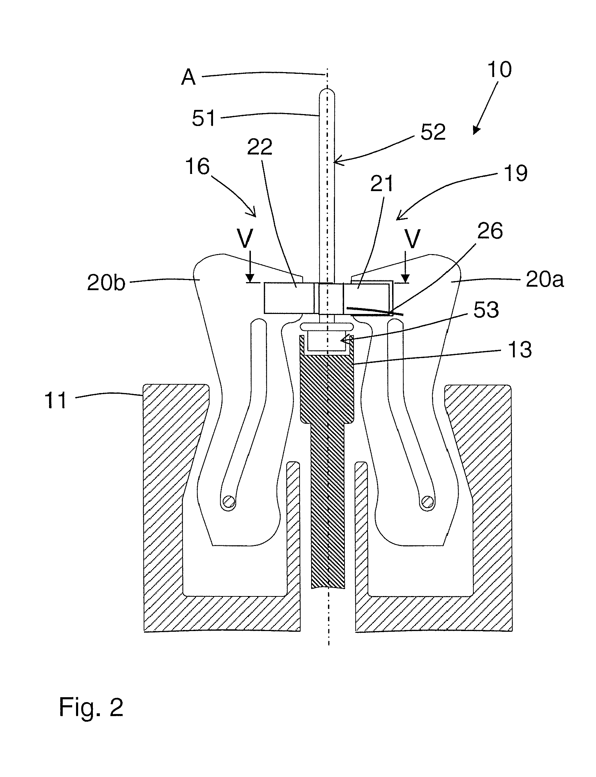

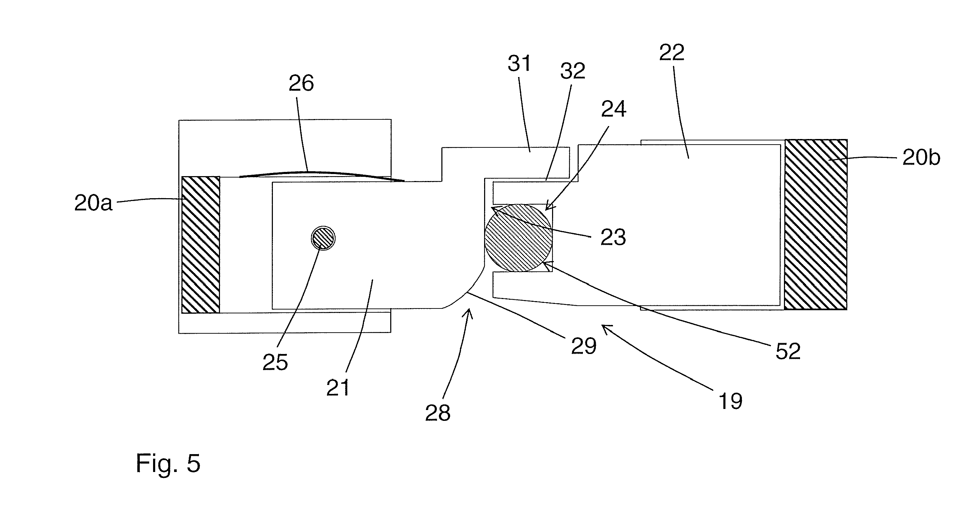

In der Haltevorrichtung 10 ist ein als Schraubwerkzeug ausgebildetes Eintreibwerkzeug 13 geführt, welches über das kraftbetriebene Eintreibgerät 40 drehbetätigt werden kann. Weiterhin weist die Haltevorrichtung 10 zwei beweglich an dem Grundkörper 11 geführte und als Greifarme ausgebildete Greifelemente 20a, 20b auf. An jedem der Greifelemente 20a, 20b ist jeweils an einander zugewandten Seiten ein Backenelement 21, 22 angeordnet. Beide Backenelemente 21, 22 weisen jeweils an ihren freien Enden 27 Ausnehmungen 23, 24 auf, die in einer in den Figuren 2 und 5 dargestellten Stützstellung 19 der Greifelemente 20a, 20b einen Aufnahme- und Führungsraum für einen Schaft 52 eines Befestigungselements 51 bilden. Die Ausnehmungen 23, 24 definieren eine Achse A, die der Werkzeugachse des Eintreibwerkzeugs 13 und der Eintreibachse des Befestigungsmittels 51 entspricht.

Das erste Backenelement 21 ist über ein Schwenklager 25, dessen Schwenkachse S parallel zur Achse A verläuft, verschwenkbar an dem ersten Greifelement 20a gelagert. Das zweite Backenelement 22 ist hingegen starr an dem zweiten Greifelement 20b festgelegt. Über ein Federelement 26 ist das schwenkbare erste Backenelement 21 in Richtung auf die Stützstellung 19 elastisch beaufschlagt. An dem zweiten Backenelement 22 ist eine Abstützfläche 32 für das schwenkbare erste Backenelement 21 vorgesehen, an der sich das schwenkbare erste Backenelement 21 in der Stützstellung 19 mit einem Vorsprung 31 abstützt.

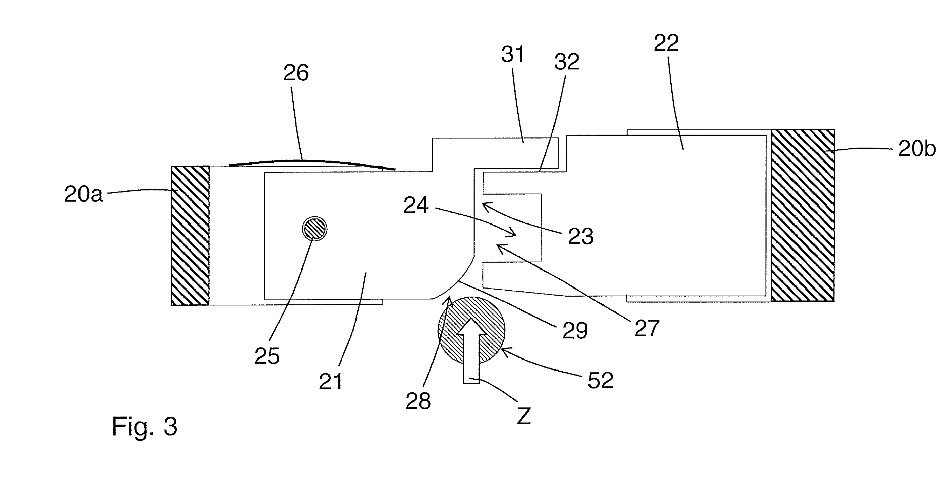

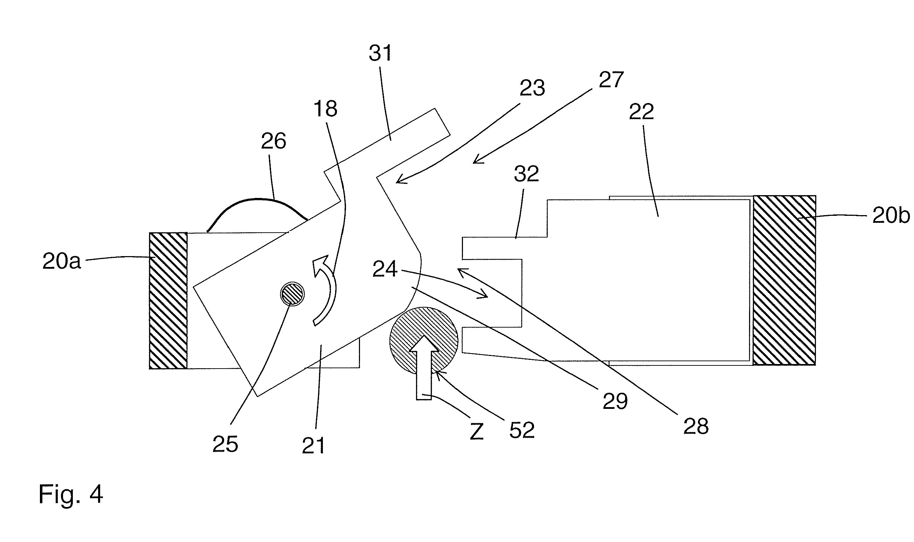

In Fig. 3 wird ein Befestigungsmittel 51 mit seinem Schaft 52 manuell in Zuführrichtung Z der Haltevorrichtung 10 zugeführt. Wie aus Fig. 4 ersichtlich, wird durch den Schaft 52 des Befestigungsmittels 51, der gegen eine Einführschräge 29 im Bereich der offenen Seite 28 der Ausnehmung 23 am ersten Backenelement 21 fährt, das erste Backenelement 21 in Richtung des Drehpfeils 18 verschwenkt. Sobald der Schaft 52 des Befestigungsmittels 51 in der Ausnehmung 24 am freien Ende des zweiten Backenelements 22 Platz genommen hat, wird das erste Backenelement 21 über das Federelement 26 wieder in seine aus den Figuren 2 und 5 ersichtliche Stützstellung 19 zurückverschwenkt.

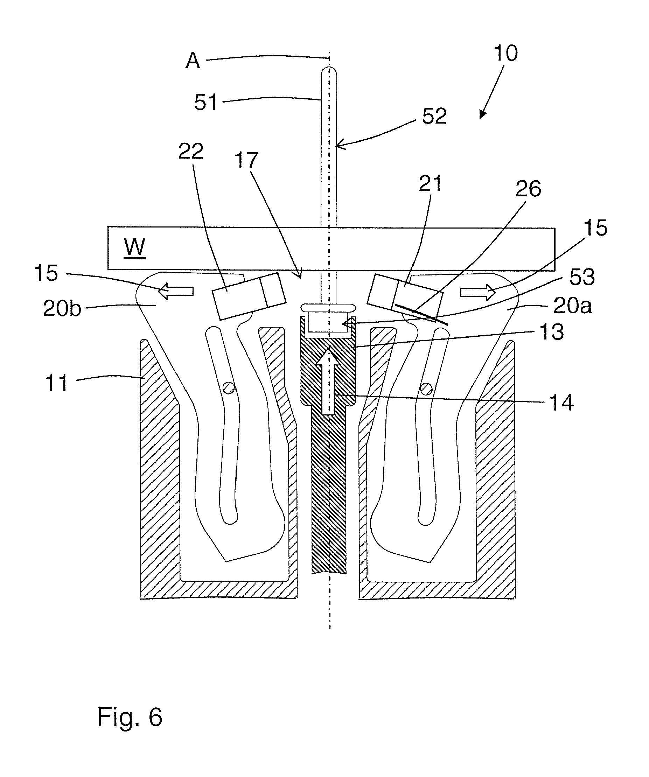

Wird das Eintreibgerät 40 mit der daran angeordneten Haltevorrichtung 10 an ein Werkstück W angedrückt und ein Befestigungsmittel 51 in das Werkstück W eingetrieben, wie aus Fig. 6 ersichtlich ist, dann wird der Grundkörper 11 relativ zu den Greifelementen 20a, 20b in Richtung des ersten Pfeils 14 bewegt. Während dieser Bewegung fahren die Greifelementen 20a, 20b auseinander, wie durch die Pfeile 15 angedeutet. Hierdurch verschwenken die Greifelementen 20a, 20b von ihrer geschlossenen Position 16 (siehe Fig. 2) in eine geöffnete Position 17 (siehe zweite Pfeile 15 in Fig. 6), in der die Backenelemente 21, 22 das Befestigungsmittel 51 nicht mehr führen und frei geben. Die Backenelemente 21, 22 liegen dann in einer grösseren Distanz zur Achse A, als in ihrer geschlossenen Position 16. Der Vorgang des Auseinanderfahrens der Backenelemente 21, 22 erfolgt noch bevor das Befestigungsmittel 31 vollständig in das Werkstück W eingeschraubt ist.

## Patentansprüche

1. Haltevorrichtung (10) für Befestigungsmittel (51), die an einem Eintreibgerät (40) festlegbar ist, wobei die Haltevorrichtung (10) mindestens zwei Greifelemente (20a, 20b) mit jeweils einem daran angeordnetem Backenelement (21, 22) aufweist, wobei die Backenelemente (21, 22) in einer Stützstellung (19) an einem Schaft (52) eines Befestigungsmittels (51) anlegbar sind und wobei wenigstens ein erstes Backenelement (21, 22) an seinem dem anderen Backenelement (21, 22) zugewandten freien Ende (27) eine Ausnehmung (23, 24) für das Befestigungsmittel (51) aufweist, die eine Achse (A) definiert,
**dadurch gekennzeichnet,**
**dass** das erste Backenelement (21) über ein Schwenklager (25), dessen Schwenkachse (S) im Wesentlichen parallel zur Achse (A) verläuft, schwenkbar an dem Greifelement (20a) gelagert ist.

2. Haltevorrichtung nach Anspruch 1, **dadurch gekennzeichnet, dass** das schwenkbare erste Backenelement (21) über ein Federelement (26) in Richtung auf die Stützstellung (19) elastisch beaufschlagt ist.

3. Haltevorrichtung nach Anspruch 1 oder 2, **dadurch gekennzeichnet, dass** die Ausnehmung (23) des schwenkbaren ersten Backenelements (21) an einem entgegen der Zuführrichtung (Z) der Befestigungsmittel (51) liegenden Seite (28) offen ist.

4. Haltevorrichtung nach Anspruch 3, **dadurch gekennzeichnet, dass** das schwenkbare erste Backenelement (21) im Bereich der offenen Seite (28) der Ausnehmung (23) eine Einführschräge (29) für die Befestigungsmittel (51) aufweist.

5. Haltevorrichtung nach einem der Ansprüche 1 bis 4, **dadurch gekennzeichnet, dass** das zweite Backenelement (22) eine Abstützfläche (32) für das schwenkbare erste Backenelement (21) aufweist, an der sich das schwenkbare erste Backenelement (21) in der Stützstellung (19) mit einem Vorsprung (31) abstützt.
